# EUROPEAN PATENT APPLICATION

(11) **EP 2 123 842 A1**
(43) Date of publication of application: **25.11.2009**
(21) Application number: 08711618.2
(22) Date of filing: 20.02.2008
(51) Int. Cl.: E04D 13/00, H01L 31/042

(54) **STRUCTURE INSTALLATION FRAME**

(30) Priority: 23.02.2007 JP 2007044123
(71) Applicant: Sharp Kabushiki Kaisha, Osaka-shi Osaka 545-8522 (JP)
(72) Inventor: The designation of the inventor has not yet been filed
(74) Representative: Müller - Hoffmann & Partner
(86) International application number: PCT/JP2008/052812
(87) International publication number: WO 2008/102789

(57) **Abstract**

A structure installation stand 1 according to the present invention includes: a mounting rail 4 on which a structure is mounted; and a metal tap fitting 31 that locks the structure onto the mounting rail 4. The mounting rail 4 is configured to include at least a middle plate 11a that extends in the lengthwise direction of the mounting rail 4, and two side plates 11b that are parallel to each other on both sides of the middle plate 11a, and the metal tap fitting 31 is configured to include a middle plate 31b, two side plates 31d that are parallel to each other on both sides of the middle plate 31b, and support pieces 31a that protrude above the middle plate 31d from the side plates 31d, respectively. The metal tap fitting 31 is disposed inside the mounting rail 4 such that the side plates 31d of the metal tap fitting 31 are perpendicular to the side plates 11b of the mounting rail 4, and the support pieces 31a of the metal tap fitting 31 protrude from a hole 11d of the middle plate 11a of the mounting rail 4 so that the structure is locked onto the mounting rail 4 by the support pieces 31a of the metal tap fitting 31.

## Description

### Technical Field

The present invention relates to a structure installation stand suitable for installing a flat plate-like structure such as a solar cell module.

### Background Art

In this type of stand, because a flat plate-like structure is subject to wind pressure, it is necessary to sufficiently increase the strength of the stand and to firmly attach a flat plate-like structure and support the structure, considering not only the load from the structure but also wind pressure.

To this end, according to conventional technology, methods are employed in which a structure, such as a solar cell module, is fixed directly using bolts inserted through the frame of the structure, and in which a structure is fixed by providing fixing metal fittings to the frame of the structure and fixing the fixing metal fittings with bolts (see Patent Documents 1 and 2).
[Patent Document 1] JP 2004-140256A
[Patent Document 2] JP 2006-210613A

### Disclosure of Invention

### Problem to be Solved by the Invention

However, conventional stands, regardless of whether the method involves the use of only bolts or the combined use of fixing metal fittings and bolts, are designed without consideration of the adjustment of the position of a structure, such as a solar cell module; thus, it is difficult or impossible to adjust the position of the structure.

For example, when arranging a plurality of solar cell modules side by side, it is necessary to adjust the positions of adjacent solar cell modules, but with conventional stands, it is not possible to perform such an adjustment, making construction work very difficult.

The present invention has been conceived in view of the problems encountered in conventional technology, and it is an object of the present invention to provide a structure installation stand that has a high strength under load and wind pressure and with which the position of the structure can be adjusted.

### Means for Solving the Problems

In order to solve the above problem, a structure installation stand of the present invention is a structure installation stand including: a mounting rail on which a structure is mounted; and a metal tap fitting that locks the structure onto the mounting rail, wherein the mounting rail includes at least a middle plate that extends in a lengthwise direction of the mounting rail and two side plates that are parallel to each other on both sides of the middle plate, the metal tap fitting includes a middle plate, two side plates that are parallel to each other on both sides of the middle plate thereof, and support pieces that protrude above the middle plate thereof from the side plates, respectively, and the metal tap fitting is disposed inside the mounting rail such that the side plates of the metal tap fitting are perpendicular to the side plates of the mounting rail, and the support pieces of the metal tap fitting are allowed to protrude from a hole of the middle plate of the mounting rail so that the structure is locked onto the mounting rail by the support pieces of the metal tap fitting.

Also, the side plates of the metal tap fitting are double ply by being folded in two, and the support pieces of the metal tap fitting protrude above the middle plate of the metal tap fitting from ends of the side plates.

Furthermore, the support pieces that protrude from the ends of the side plates of the metal tap fitting have a T-shaped head portion, and the ends of the side plates of the metal tap fitting are recessed below an upper surface of the middle plate of the metal tap fitting.

Also, the middle plate of the metal tap fitting is fixed inside the mounting rail so as to overlap the middle plate of the mounting rail.

Furthermore, a length of the side plates of the metal tap fitting and an inner distance between the side plates of the mounting rail are made substantially equal.

Also, the support pieces of the metal tap fitting have a T-shaped head portion, and the hole of the middle plate of the mounting rail is formed by connecting an insert slit through which the T-shaped head portions of the support pieces are inserted and an engagement hole in which the T-shaped head portions of the support pieces are hooked, so that the T-shaped head portions of the support pieces are inserted through the insert slit and guided to the engagement hole.

### Effects of the Invention

In such a structure installation stand of the present invention, a metal tap fitting is disposed inside a mounting rail in a state in which the side plates of the mounting rail and the side plates of the metal tap fitting are perpendicular to each other, each support piece of the metal tap fitting is allowed to protrude from a hole of a middle plate of the mounting rail, and a structure is locked onto the mounting rail by the support pieces of the metal tap fitting. Although depending on the shape of the hole, because the support pieces of the metal tap fitting are allowed to protrude from the hole of the middle plate of the mounting rail, in the case of the hole having an elongated hole shape, the support pieces of the metal tap fitting can be moved along the elongated hole. Accordingly, adjustment of the position of the structure is possible.

Also, because the side plates of the mounting rail and the side plates of the metal tap fitting are perpendicular to each other, the side plates of the metal tap fitting prevent the side plates of the mounting rail from warping and the mounting rail from twisting and, as a result, the mounting rail is strongly reinforced.

Furthermore, because the side plates of the metal tap fitting are double ply by being folded in two, the metal tap fitting itself has a high strength, so the strength of the mounting rail that is reinforced by the metal tap fitting is further improved.

Also, the support pieces that protrude from the ends of the side plates of the metal tap fitting have a T-shaped head portion, and the ends of the side plates of the metal tap fitting are recessed below the upper surface of the middle plate of the metal tap fitting. Accordingly, the T-shaped head portion of each support piece, at the positions of the ends of the side plates of the metal tap fitting, is easily inserted into the hole of the middle plate of the mounting rail.

Furthermore, inside the mounting rail, the middle plate of the metal tap fitting is fixed so as to overlap the middle plate of the mounting rail, which also reinforces the middle plate of the mounting rail.

Also, because the length of the side plates of the metal tap fitting and the inner distance between the side plates of the mounting rail are made substantially equal, in a state in which the side plates of the mounting rail and the side plates of the metal tap fitting are perpendicular to each other, the side plates of the metal tap fitting are substantially sandwiched between the side plates of the mounting rail, so the metal tap fitting is well-fitted to the inside of the mounting rail. Thus, no space is formed between the metal tap fitting and the mounting rail and, as a result, the mounting rail is further strongly reinforced by the metal tap fitting.

Also, the support pieces of the metal tap fitting have a T-shaped head portion, and the hole of the middle plate of the mounting rail is formed by connecting an insert slit through which the T-shaped head portion of each support piece is inserted and an engagement hole in which the T-shaped head portion of each support piece is hooked, so the T-shaped head portion of each support piece is inserted through the insert slit and guided to the engagement hole. This configuration makes it easy to attach the metal tap fitting to the mounting rail and, after attachment, the T-shaped head portion of each support piece of the metal tap fitting is hooked in the engagement hole of the middle plate of the mounting rail, so the metal tap fitting will not fall off.

### Brief Description of Drawings

[FIG. 1] FIG. 1 is a perspective view of a structure installation stand according to an embodiment of the present invention.
[FIG. 2] FIG. 2 is a perspective view of a base portion of the structure installation stand of FIG. 1.
[FIG. 3a] FIG. 3a is a perspective view of a main rail portion constituting a mounting rail of the structure installation stand of FIG. 1.
[FIG. 3b] FIG. 3b is a perspective view of a rail front end portion constituting the mounting rail of the structure installation stand of FIG. 1.
[FIG. 4a] FIG. 4a is a perspective view of a vicinity of the front end of a mounting rail of the structure installation stand of FIG. 1.
[FIG. 4b] FIG. 4b is a front view of the vicinity of the front end of a mounting rail of the structure installation stand of FIG. 1.
[FIG. 4c] FIG. 4c is a side view of the vicinity of the front end of a mounting rail of the structure installation stand of FIG. 1.
[FIG. 4d] FIG. 4d is a plan view of the vicinity of the front end of a mounting rail of the structure installation stand of FIG. 1.
[FIG. 5] FIG. 5 is a perspective view of a vicinity of the lower end of a vertical support of the structure installation stand of FIG. 1.
[FIG. 6] FIG. 6 is an unfolded view of the rail front end portion of FIG. 3b.
[FIG. 7] FIG. 7 is a perspective view of a reinforcing member of the structure installation stand of FIG. 1
[FIG. 8] FIG. 8 is a perspective view of a vicinity of the front end of the mounting rail of the structure installation stand of FIG. 1 in which a cross rail and a fixing metal fitting are attached, as viewed from a direction different from FIG. 4a.
[FIG. 9] FIG. 9 is a perspective view of the vertical support of the structure installation stand of FIG. 1.
[FIG. 10] FIG. 10 is a perspective view of a construction example of the structure installation stand of FIG. 1.
[FIG. 11] FIG. 11 is a perspective view showing how a metal tap fitting is attached in the structure installation stand of FIG. 1.
[FIG. 12] FIG. 12 is a perspective view of the metal tap fitting of FIG. 11.
[FIG. 13a] FIG. 13a is a perspective view of the metal tap fitting and the mounting rail of FIG. 11 as viewed from the surface side.
[FIG. 13b] FIG. 13b is a perspective view of the metal tap fitting and the mounting rail of FIG. 11 as viewed from the undersurface side.
[FIG. 14] FIG. 14 is a perspective view showing how a cross rail and a fixing metal fitting are attached in the structure installation stand of FIG. 1.
[FIG. 15a] FIG. 15a is a side view used to illustrate how an eave edge cover is attached to a cross rail.
[FIG. 15b] FIG. 15b is a side view used to illustrate how an eave edge cover is attached to a cross rail.
[FIG. 16a] FIG. 16a is a diagram used to illustrate a construction procedure for mounting a solar cell module on the structure installation stand of FIG. 1 so as to be supported.
[FIG. 16b] FIG. 16b is a diagram used to illustrate a construction procedure for mounting a solar cell module on the structure installation stand of FIG. 1 so as to be supported.
[FIG. 16c] FIG. 16c is a diagram used to illustrate a construction procedure for mounting a solar cell module on the structure installation stand of FIG. 1 so as to be supported.
[FIG. 16d] FIG. 16d is a diagram used to illustrate a construction procedure for mounting a solar cell module on the structure installation stand of FIG. 1 so as to be supported.

### Description of Reference Numerals

- 1: Structure Installation Stand
- 2, 3: Base Portion
- 4: Mounting Rail
- 5: Vertical Support
- 6: Tension Bar
- 7: Rectangular Pedestal
- 8, 21, 33, 41: Bolt
- 11: Main Rail Portion
- 12: Rail Front End Portion
- 13: Reinforcing Member
- 15, 18, 22: Nut
- 16: Pressing Member
- 27: Cross Rail
- 28: Diagonal Member
- 31: Metal tap fitting
- 32: Pressing Member
- 42: Screw Clamp Metal Fitting
- 43: Fixing Metal Fitting
- 44: Eave Edge Cover
- 45: Solar Cell Module

### Best Mode for Carrying Out the Invention

Hereinafter, an embodiment of the present invention will be described in detail with reference to the accompanying drawings.

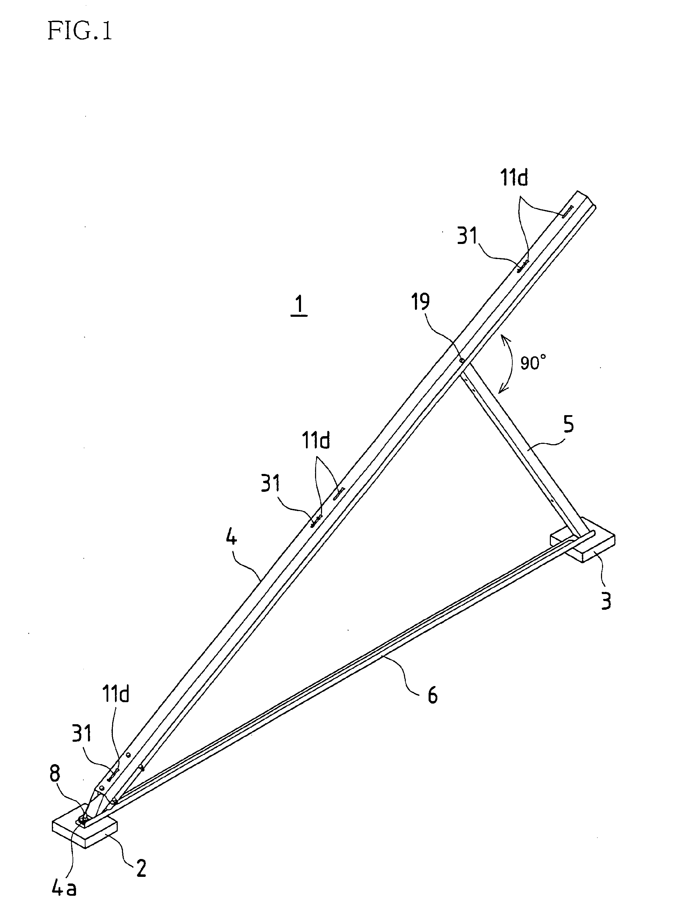

FIG. 1 is a perspective view of a structure installation stand according to an embodiment of the present invention. A structure installation stand 1 of the present embodiment is a stand for installing a flat plate-like structure, such as a solar cell module, on the ground or a flat roof. In this stand 1, a pair of base portions 2 and 3 are disposed on the ground or a flat roof with a prescribed distance therebetween, a front end portion 4a of a mounting rail 4 is joined and fixed to one of the base portions, namely, the base portion 2, a vertical support 5 is disposed and fixed between the other base portions, namely, the base portion 3, and the mounting rail 4, the mounting rail 4 and the vertical support 5 are disposed perpendicularly to each other, and a tension bar 6 is disposed and fixed straddling between the base portions 2 and 3.

In the mounting rail 4, five engagement holes 11d are formed, to three of which a metal tap fitting 31 is attached. The metal tap fittings 31 are provided to connect and fix cross rails to the mounting rail 4, which will be described later.

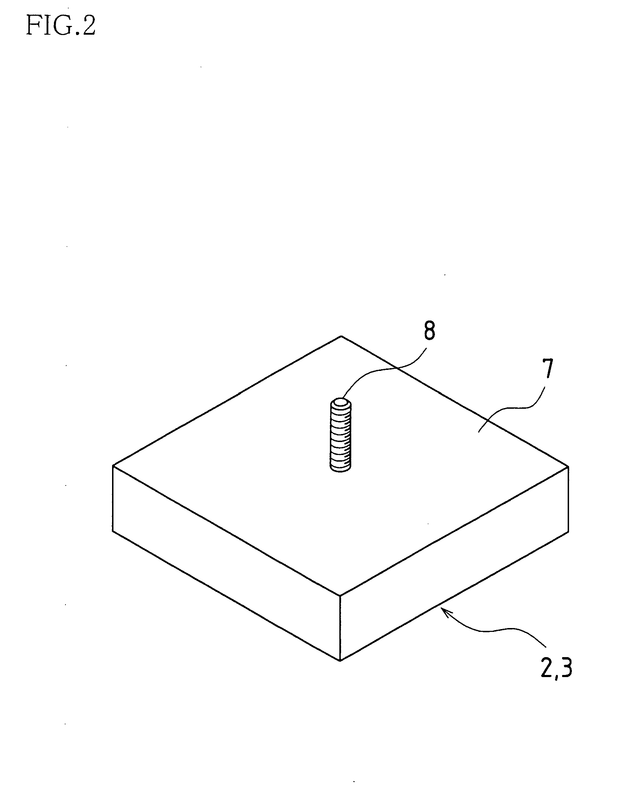

The base portions 2 and 3 each include a rectangular pedestal 7 provided with a protruding bolt 8 as shown in FIG. 2, and the rectangular pedestal 7 is fixedly disposed on the ground or a flat roof with the bolt 8 protruding upward.

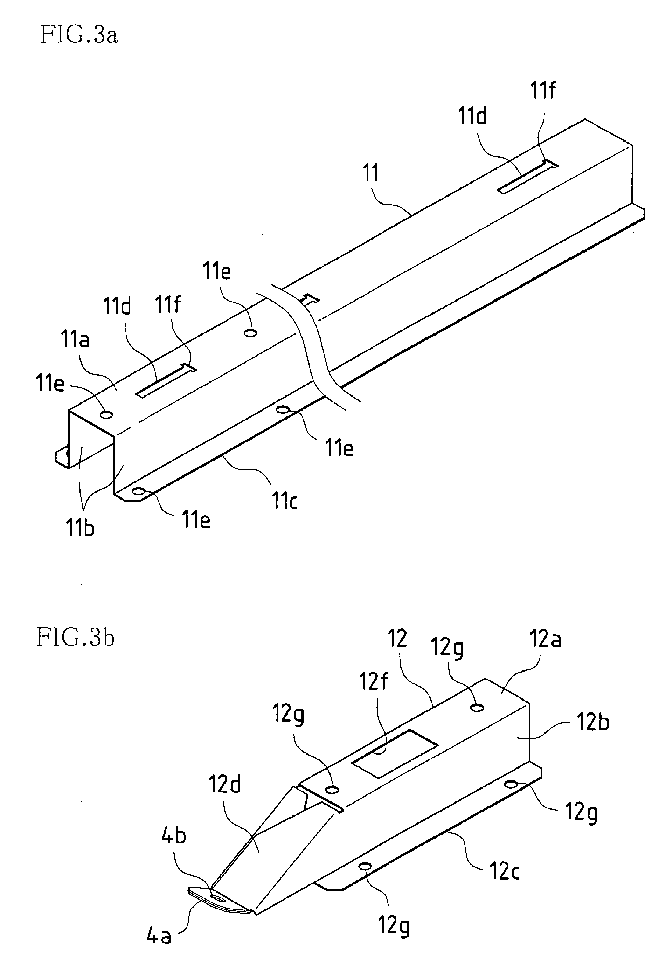

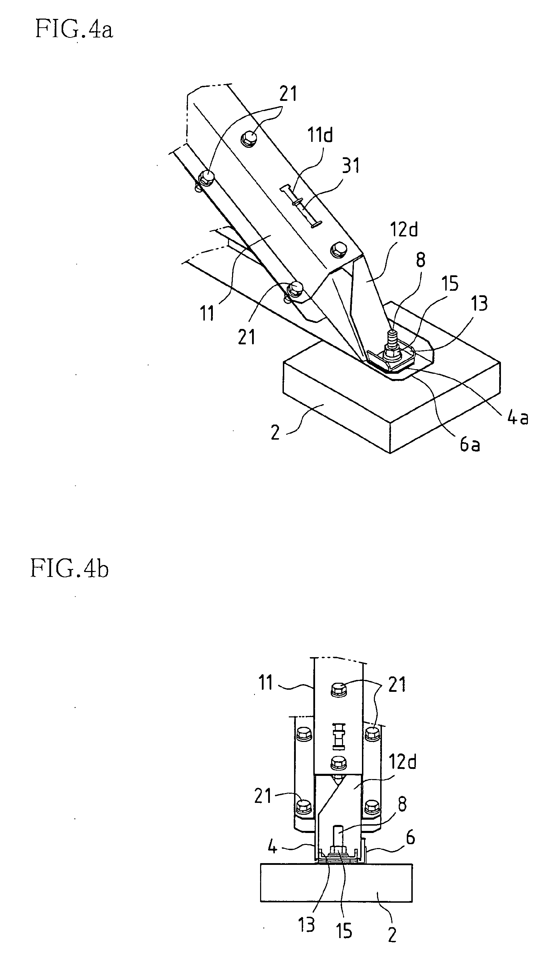

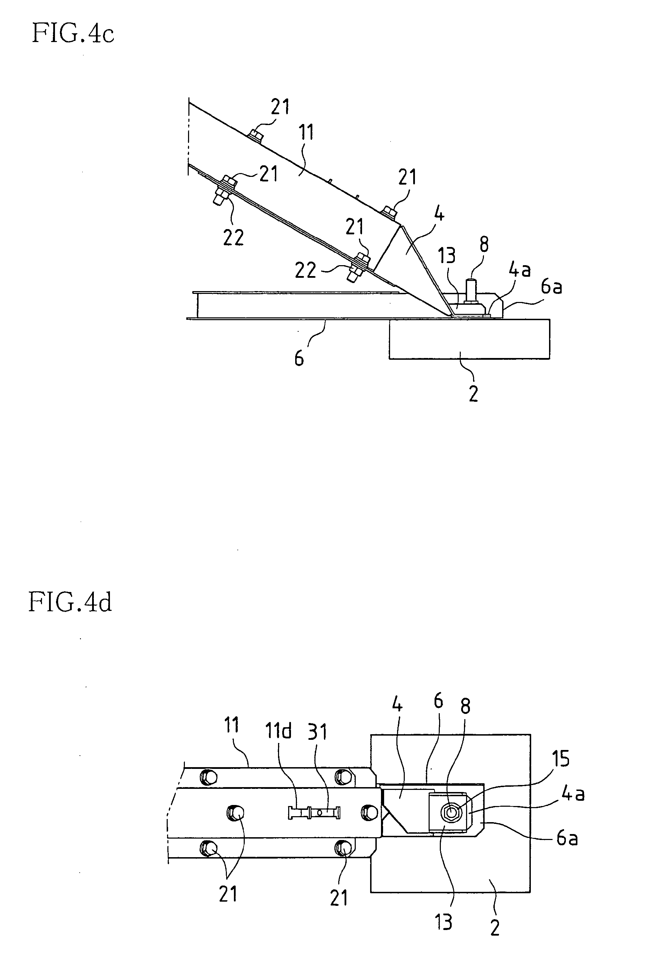

The mounting rail 4 is formed by combining a main rail portion 11 and a rail front end portion 12 that have a hat-shaped cross section as shown in FIGS. 3a and 3b, and the rail front end portion 12 is joined and fixed to one end of the main rail portion 11 as shown in FIGS. 4a to 4d.

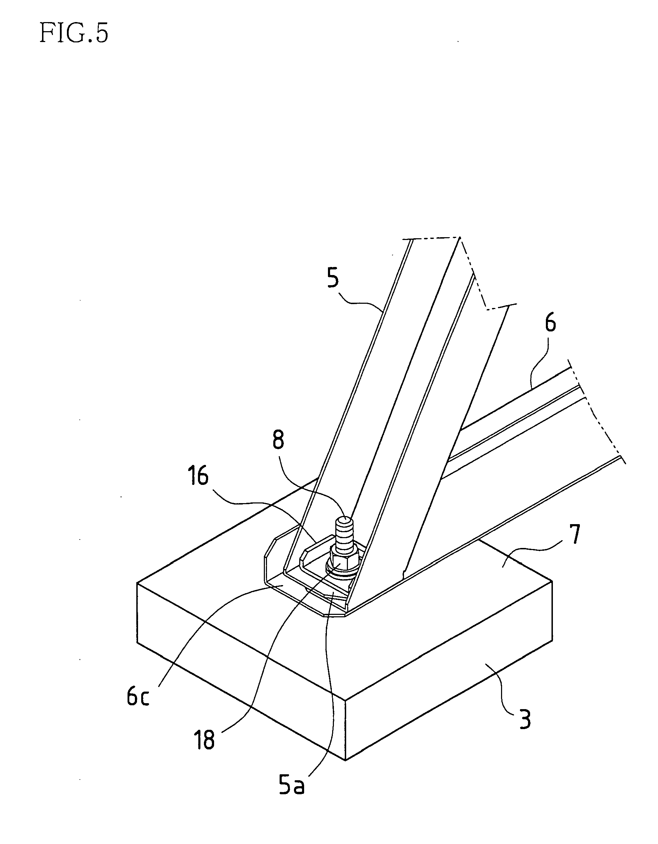

The vertical support 5 has an approximately U-shaped cross section as shown in FIG. 5. As used herein, "approximately U-shaped" encompasses a U shape with angles. Likewise, the tension bar 6 has an L-shaped cross section as shown in FIG. 1 and FIGS. 4a to 4d.

The mounting rail 4, the vertical support 5 and the tension bar 6 are all formed by applying cutting and bending processes to a metal plate such as a plated steel plate.

As shown in FIG. 1 and FIGS. 4a to 4d, a front end portion 6a of the tension bar 6 is mounted on the base portion 2 by inserting the bolt 8 of the base portion 2 through a hole of the front end portion 6a of the tension bar 6, and the bolt 8 is inserted through a hole of the front end portion 4a of the mounting rail 4 and a hole of a reinforcing member 13 so that the front end portion 6a of the tension bar 6, the front end portion 4a of the mounting rail 4 and the reinforcing member 13 are sequentially superimposed on the base portion 2. After that, a nut 15 is screwed onto the bolt 8 with a washer inserted therebetween to clamp them. By doing so, the front end portion 6a of the tension bar 6 and the front end portion 4a of the mounting rail 4 are fixed to the base portion 2.

Likewise, as shown in FIG. 5, a rear end portion 6c of the tension bar 6 is mounted on the base portion 3 by inserting the bolt 8 of the base portion 3 through a hole of the rear end portion 6c of the tension bar 6, and the bolt 8 of the base portion 3 is inserted through a hole of a lower end face portion 5a of the vertical support 5 and a hole of a pressing member 16 so that the rear end portion 6c of the tension bar 6, the lower end face portion 5a of the vertical support 5 and the pressing member 16 are sequentially superimposed on the base portion 3. After that, a nut 18 is screwed onto the bolt 8 with a washer inserted therebetween to clamp them. By doing so, the rear end portion 6c of the tension bar 6 and the front end portion 4a of the mounting rail 4 are fixed to the base portion 3.

Furthermore, as shown in FIG. 1, an upper end portion of the vertical support 5 is inserted into the hat-shaped main rail portion 11, a bolt 19 is passed through the main rail portion 11 and the vertical support 5, and a nut (not shown) is screwed onto the bolt 19 to clamp them. By doing so, the vertical support 5 is connected and fixed to the main rail portion 11. The upper end portion of the vertical support 5 is positioned and connected such that the vertical support 5 and the main rail portion 11 are disposed perpendicularly to each other.

As will be described later in detail, a plurality of such structure installation stands 1 are arranged side by side on the ground, a flat roof or the like. A plurality of structure installation stands 1 are arranged substantially parallel and fixed, a plurality of cross rails are disposed straddling the horizontal direction on the mounting rails 4 of the structure installation stands 1, and a solar cell module is supported between the cross rails.

As is clear from FIG. 1, the mounting rail 4, the vertical support 5 and the tension bar 6 are combined to form a right-angled triangular shape when the structure installation stand 1 is viewed as a whole. In such a stand 1 configured to have a right-angled shape, because the force that acts on the mounting rail 4 can be received dispersively by the mounting rail 4, the vertical support 5 and the tension bar 6, the strength of the stand 1 increases. For example, the load from a solar cell module mounted on the mounting rail 4, the wind pressure applied to the solar cell module, and the like can be received dispersively by the mounting rail 4, the vertical support 5 and the tension bar 6.

In addition, the mounting rail 4 is configured to have a hat-shaped cross section so as to increase the cross sectional strength thereof, and the vertical support 5 and the tension bar 6 are configured to have an approximately U-shaped cross section and an L-shaped cross section, respectively, so as to increase the cross sectional strengths thereof. That is, the strength is increased for each of the mounting rail 4, the vertical support 5 and the tension bar 6.

Here, the tension bar 6 may be omitted as long as the base portions 2 and 3 can be firmly attached to a flat roof and no positional shift occurs between the base portions 2 and 3. However, the tension bar 6 is required in the case of installing the base portions 2 and 3 on the ground.

In the right-angled triangular-shaped structure that includes the mounting rail 4, the vertical support 5 and the tension bar 6, although the force can be received dispersively by the mounting rail 4, the vertical support 5 and the tension bar 6, the force eventually concentrates on the front end portion 4a of the mounting rail 4 and the lower end face portion 5a of the vertical support 5, so it is necessary to increase the strength of these portions.

To this end, a structure for specifically enhancing the strength is adopted for the front end portion 4a of the mounting rail 4 and the lower end face portion 5a of the vertical support 5.

A structure of the front end portion 4a of the mounting rail 4 will be described next. The mounting rail 4 is formed by combining the main rail portion 11 and the rail front end portion 12 as shown in FIGS. 3a and 3b. The main rail portion 11 is formed by applying a bending process to a metal plate so as to have a hat-shaped cross section, and includes a middle plate 11a that extends in the lengthwise direction of the main rail portion 11, side plates 11b that are parallel to each other on both sides of the middle plate 11a, and edge plates 11c that protrude on both sides from the edge of the side plates 11b. The rail front end portion 12 is formed by applying a bending process to a metal plate as with the main rail portion 11, and includes a middle plate 12a, side plates 12b and edges 12c, and further includes an inclined end face portion 12d that protrudes forward from the middle plate 12a and the front end portion 4a that is at the front of the inclined end face portion 12d.

As shown in FIG. 1, engagement holes 11d are formed at a plurality of positions spaced from each other in the middle plate 11a of the main rail portion 11. Also, as shown in FIG. 3a, in the vicinity of one end of the main rail portion 11, two holes 11e are formed in the middle plate 11a, and another two holes 11e are formed in each edge 11c, that is, six holes 11e in total are formed.

As shown in FIG. 3b, an open hole 12f is formed in the middle plate 12a of the rail front end portion 12. Also, two holes 12g are formed in the middle plate 12a of the rail front end portion 12, and another two holes 12g are formed in each edge 12c, that is, six holes 12g in total are formed.

As shown in FIGS. 4a to 4d, the main rail portion 11 and the rail front end portion 12 are combined and fixed by fitting the rail front end portion 12 into one end of the main rail portion 11, aligning the six holes 11e of the main rail portion 11 and the six holes 12g of the rail front end portion 12, inserting six bolts 21 into the holes 11e and 12g, and screwing nuts 22 onto the bolts 21 to clamp them. At this time, the open hole 12f of the rail front end portion 12 overlaps the engagement hole 11d in the vicinity of one end of the main rail portion 11, so that the engagement hole 11d in the vicinity of one end of the main rail portion 11 is open.

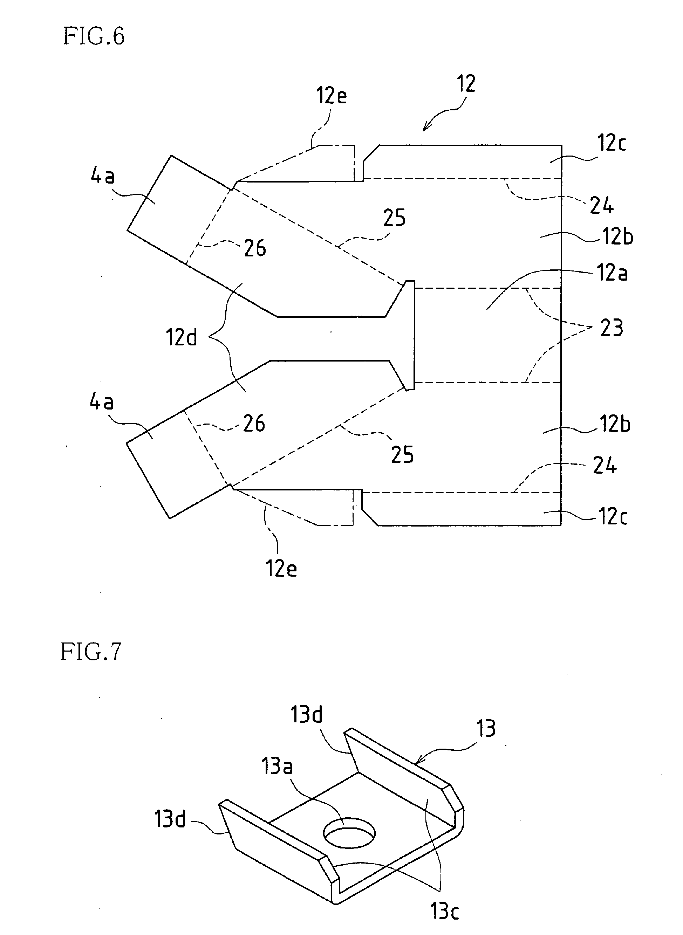

FIG. 6 is an unfolded view of the rail front end portion 12. The rail front end portion 12 is formed by cutting a metal plate, such as a plated steel plate, into a shape shown in the unfolded view of FIG. 6 and bending the metal plate of the unfolded shape. Specifically, the middle plate 12a, the side plates 12b and the edges 12c are formed by making a mountain fold along each fold line 23 and a valley fold along each fold line 24. The inclined end face portion 12d and the front end portion 4a that is at the front of the inclined end face portion 12d are formed by making a mountain fold along a fold line 25 of each side plate 12b and overlapping the front end sides of the side plates 12b. Furthermore, a valley fold is made along a fold line 26 that is between the inclined end face portion 12d and the front end portion 4a so as to incline the front end portion 4a with respect to the lengthwise direction of the rail front end portion 12 (mounting rail 4). In the front end portion 4a, a hole 4b is formed as shown in FIG. 3b.

Because the front end portion 4a of the mounting rail 4 is fixed to the base portion 2 and the vertical support 5 is fixed between the base portion 3 and the mounting rail 4, the mounting rail 4 is supported at an incline. In this state, the front end portion 4a formed by making a valley fold along the fold lines 26 is exactly parallel to the upper surface of the rectangular pedestal 7 of the base portion 2.

Accordingly, as shown in FIGS. 4a to 4d, when the front end portion 4a is mounted on the rectangular pedestal 7 of the base portion 2 with the front end portion 6a of the tension bar 6 interposed therebetween, and the reinforcing member 13 is mounted on the front end portion 4a and, after that, a nut 15 is screwed onto the bolt 8 to clamp them, the front end portion 4a is uniformly pressed against the upper surface of the rectangular pedestal 7 of the base portion 2 via the front end portion 6a of the tension bar 6, so the front end portion 4a is fixed firmly to the base portion 2.

The reinforcing member 13 has an approximately U-shaped cross section as shown in FIG. 7, and includes a hole 13a in the center thereof and edge plates 13c provided to both sides thereof. The front end side of each edge plate 13c is obliquely cut so as to form a contact end face 13d.

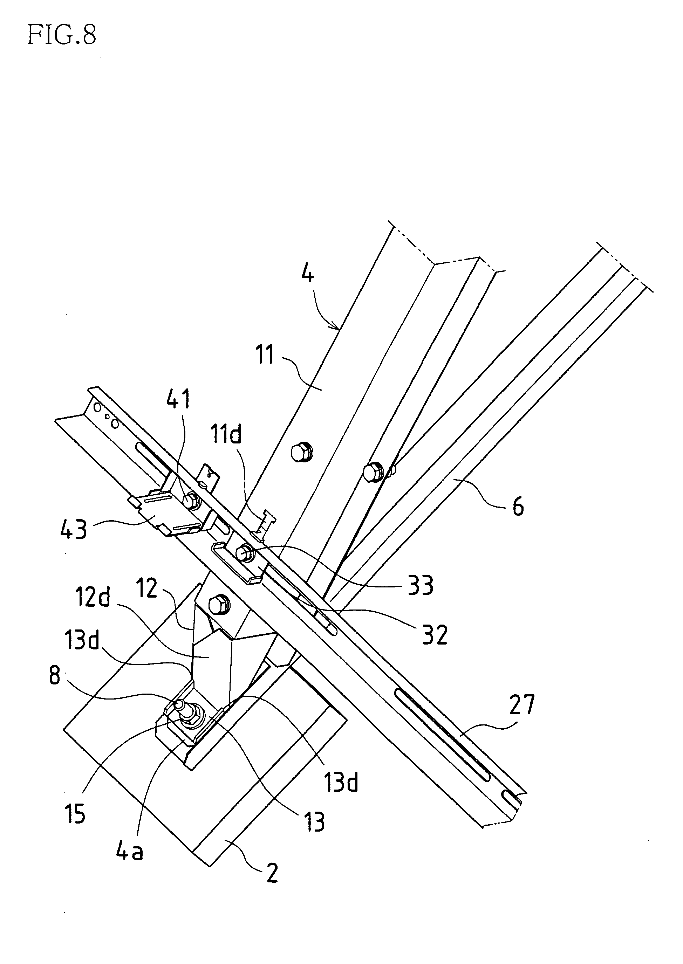

When mounting the reinforcing member 13 onto the front end portion 4a of the rail front end portion 12, as shown in FIG. 8, the reinforcing member 13 is mounted such that the contact end faces 13d of the reinforcing member 13 face the inclined end face portion 12d of the rail front end portion 12. Then, the nut 15 is screwed onto the bolt 8 to clamp them, the lower surface of the reinforcing member 13 is brought into firm contact with the front end portion 4a of the rail front end portion 12, and the contact end faces 13d of the reinforcing member 13 are brought into firm contact with the inclined end face portion 12d of the rail front end portion 12. By doing so, the inclined end face portion 12d of the rail front end portion 12 is pressed, reinforcing the front end portion 4a of the rail front end portion 12, and preventing the front end portion 4a from bending in the direction in which the mounting rail 4 rises up.

As described above, the front end portion 4a of the mounting rail 4 is formed by bending a metal plate of the unfolded shape shown in FIG. 6, the mounting rail 4 includes the double-ply inclined end face portion 12d and the double-ply front end portion 4a, and the front end portion 4a is fixed to the base portion 2. In addition, the front end portion 4a of the rail front end portion 12 is reinforced by the reinforcing member 13 so that the front end portion 4a does not bend in the direction in which the mounting rail 4 rises up.

In FIG. 6, it is also possible to provide reinforcing plates 12e indicated by a long dashed short dashed line to two sides of the inclined end face portion 12d and fold the reinforcing plates 12e to the inside of the rail front end portions 12 and over the side plates 12b so as to further increase the strength of the rail front end portion 12.

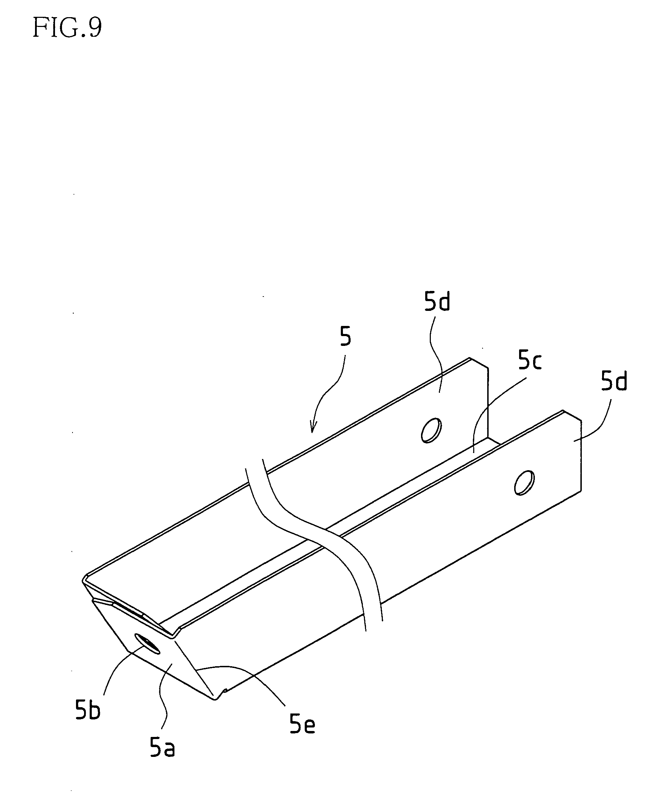

A structure of the lower end face portion 5a of the vertical support 5 will be described next. The vertical support 5 is formed by applying a bending process to a metal plate so as to have an approximately U-shaped cross section as shown in FIG. 9, and includes a middle plate 5c that extends in the lengthwise direction of the vertical support 5 and side plates 5d that also extend in the lengthwise direction and are parallel to each other. Thus, fold lines 5e of the side plates 5d are mountain folded so that the front end sides of the side plates 5d overlap each other to form a lower end face portion 5a. A hole 5b is formed in the lower end face portion 5a.

As shown in FIG. 5, the lower end face portion 5a of the vertical support 5 is mounted on the rectangular pedestal 7 of the base portion 3 with the rear end portion 6c of the tension bar 6 interposed therebetween, and a pressing member 16 is mounted on the lower end face portion 5a and, after that, a nut 18 is screwed onto the bolt 8 to clamp them so as to fix the double-ply lower end face portion 5a of the vertical support 5 to the base portion 3.

As described above, the double-ply inclined end face portion 12d and the double-ply front end portion 4a are provided to the rail front end portion 12 of the mounting rail 4, and the front end portion 4a is fixed to the base portion 2. Also, the double-ply lower end face portion 5a is provided to the vertical support 5, and the lower end face portion 5a is fixed to the base portion 3.

The double-ply inclined end face portion 12d and the double-ply front end portion 4a of the rail front end portion 12 of the mounting rail 4 have an increased strength as compared to single-ply, and are reinforced by the reinforcing member 13. Accordingly, even if the force acting on the mounting rail 4 concentrates on the front end portion 4a, the front end portion 4a can withstand the force.

Similarly, the double-ply lower end face portion 5a of the vertical support 5 also has an increased strength, so even if the force acting on the mounting rail 4 concentrates on the lower end face portion 5a of the vertical support 5, the lower end face portion 5a can withstand the force.

For example, in a state in which a solar cell module is mounted on the mounting rail 4, although the load from the solar cell module acts dispersively on the mounting rail 4, the vertical support 5 and the tension bar 6 that form a right-angled triangular shape, a horizontal force and a vertical force are concentrated and applied onto both the front end portion 4a of the mounting rail 4 and the lower end face portion 5a of the vertical support 5.

In addition, when wind pressure acts on the solar cell module of the mounting rail 4, by the action of such wind pressure, the horizontal force and the vertical force acting on the front end portion 4a and the lower end face portion 5a increase.

However, because the front end portion 4a and the lower end face portion 5a have a high strength, the front end portion 4a and the lower end face portion 5a can withstand such force and support the solar cell module without any problems.

If the strength of the front end portion 4a and the lower end face portion 5a is not high, the front end portion 4a and the lower end face portion 5a cannot withstand the load from the solar cell module and wind pressure, causing deformation or damage to the front end portion 4a and the lower end face portion 5a.

In other words, increasing the strength of the front end portion 4a and the lower end face portion 5a has made it possible to adopt a right-angled triangular-shaped structure formed by the mounting rail 4, the vertical support 5 and the tension bar 6.

In addition, because the vertical support 5 is disposed perpendicularly to the mounting rail 4, the wind pressure acting on the mounting rail 4 can be received by the vertical support 5, so it is possible to withstand strong wind pressure in severe weather conditions.

Furthermore, in spite of their high strength, the front end portion 4a of the mounting rail 4 and the lower end face portion 5a of the vertical support 5 can be formed by cutting one metal plate and bending it, so there is no need to increase the number of components.

In the structure installation stand 1 of the present embodiment, a metal tap fitting for attaching a solar cell module onto the mounting rail 4 and supporting the solar cell module will be described next.

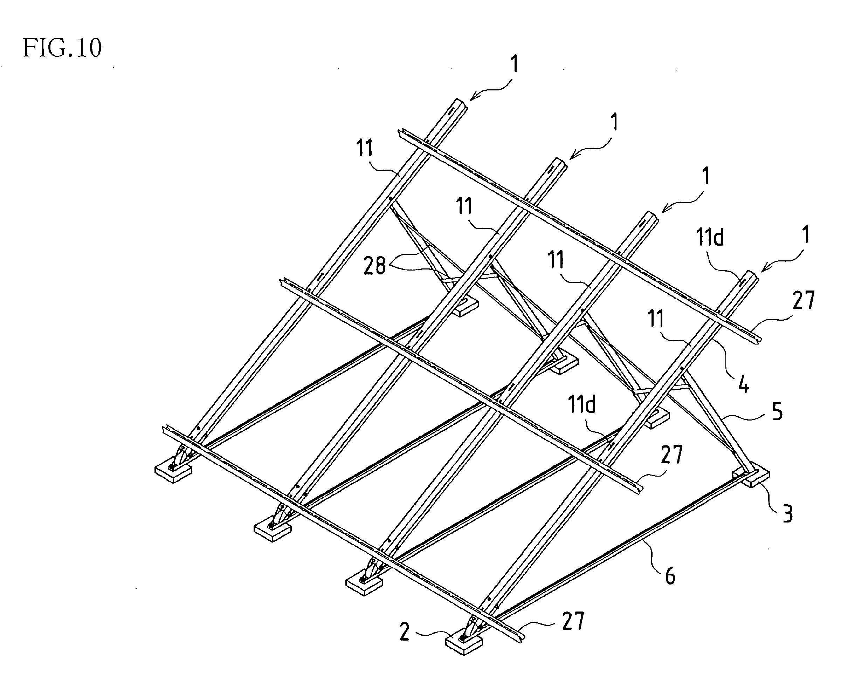

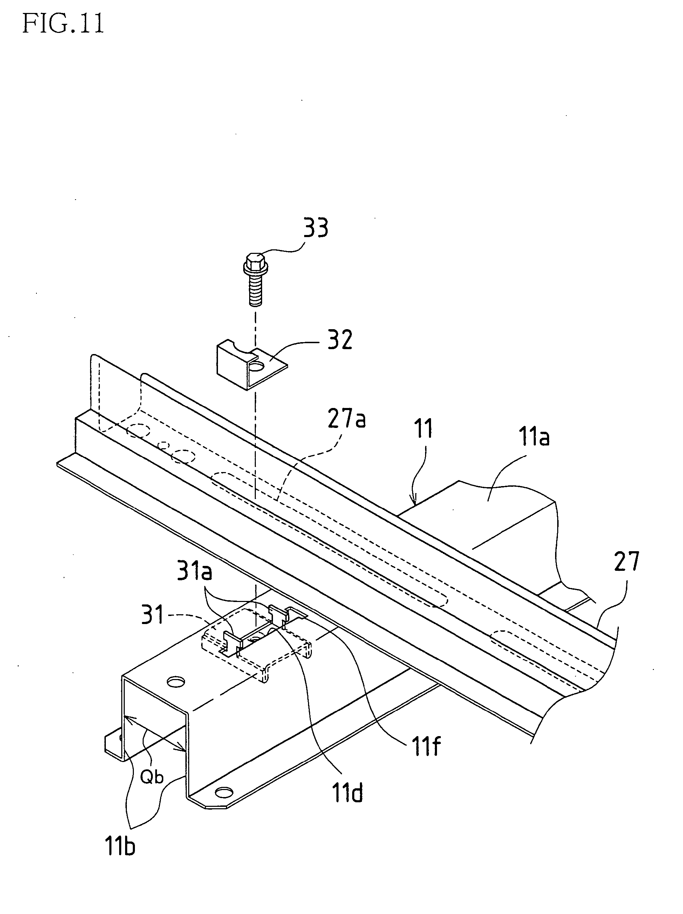

In the present embodiment, as shown in FIGS. 1 and 10, engagement holes 11d are formed at a plurality of positions of the main rail portion 11 of the mounting rail 4. As shown in FIG. 11, the metal tap fitting 31 is attached from the undersurface side of the middle plate 11a of the main rail portion 11 through the engagement hole 11d such that a pair of support pieces 31a of the metal tap fitting 31 protrude on the surface side of the middle plate 11a of the main rail portion 11, and a cross rail 27 is sandwiched between the pair of support pieces 31a and supported.

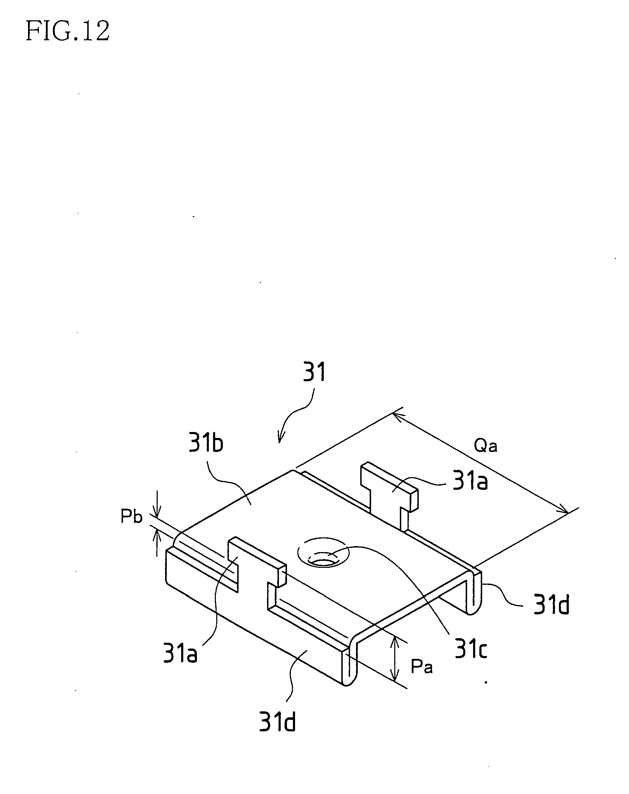

As shown in FIG. 12, the metal tap fitting 31 includes a middle plate 31b in which a screw hole 31c is formed, 31c, double-folded side plates 31d provided on both sides of the milled plate 31b, and T-shaped support pieces 31a respectively protruding from the center of the side plates 31d.

The upper end of the side plates 31d is made lower than the upper surface of the middle plate 31b so as to make a space Pa between the upper end of the side plate 31d and the T-shaped support piece 31a larger than a space Pb between the upper surface of the middle plate 31b and the T-shaped support piece 31a.

Also, a width Qa of the metal tap fitting 31 is set to be slightly smaller than an inner distance Qb between the side plates 12b of the main rail portion 11.

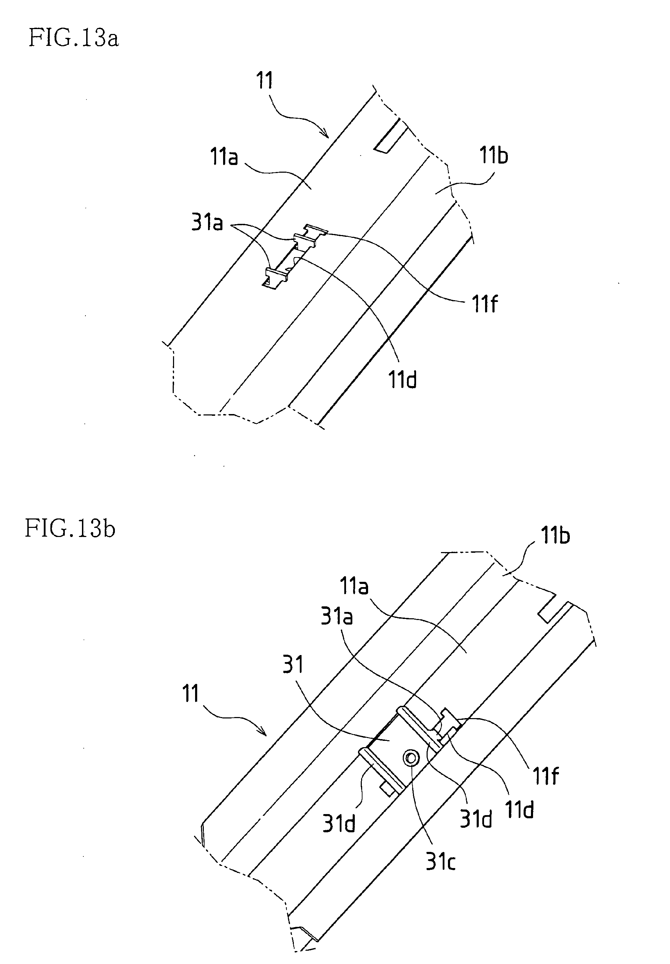

As shown in FIGS. 13a and 13b, the metal tap fitting 31 is attached to the main rail portion 11 by inserting one of the support pieces 31a of the metal tap fitting 31 into an insert slit 11f of the main rail portion 11 and moving the support piece 31a from the insert slit 11f to the engagement hole 11d and, then, inserting another support piece 31a of the metal tap fitting 31 into the insert slit 11f and moving the support piece 31a from the insert slit 11f to the engagement hole 11d so that the T-shaped head portions of the support pieces 31a are hooked in the engagement hole 11d. At this time, the side plates 31d of the metal tap fitting 31 are disposed perpendicularly to the side plates 11b of the main rail portion 11.

It is necessary to incline the metal tap fitting 31 with respect to the middle plate 11a of the main rail portion 11 when inserting a support piece 31a of the metal tap fitting 31 into the insert slit 11f, but because in a state in which the metal tap fitting 31 is inclined, the both edges of the engagement hole 11d are passed through the wide space Pa between the upper end of the side plate 31d of the metal tap fitting 31 and the T-shaped support piece 31a, the task of inserting the support piece 31a of the metal tap fitting 31 is easy.

Also, after the T-shaped head portion of a support piece 31a is hooked in the engagement hole 11d, a situation can occur in which the metal tap fitting 31 slides downward in the inclined direction of the main rail portion 11 along the engagement hole 11d and is hung until the T-shaped head portion of the other support piece 31a comes in contact with the edges of the engagement hole 11d, but because the insert slit 11f is provided above the engagement hole 11d in the inclined direction, the T-shaped head portions of the support pieces 31a will not come out from the insert slit 11f.

The engagement hole 11d and the insert slit 11f that are provided in the vicinity of the front end of the middle plate 11a of the main rail portion 11 overlap with the open hole 12f of the middle plate 12a of the rail front end portion 12, so, for the engagement hole 11d and the insert slit 11f, each support piece 31a of the metal tap fitting 31 is inserted through the open hole 12f.

After the metal tap fitting 31 is attached to the engagement hole 11d of the main rail portion 11 of the mounting rail 4 in the manner described above, as shown in FIG. 11, a cross rail 27 is disposed between the pair of support pieces 31a of the metal tap fitting 31. At the location of the metal tap fitting 31, a pressing member 32 is disposed on the cross rail 27, and a bolt 33 is screwed into the screw hole 31c of the metal tap fitting 31 through a hole of the pressing member 32 and an elongated hole 27a of the cross rail 27 to clamp them so as to fix the cross rail 27 to the main rail portion 11 of the mounting rail 4.

At this time, because the width Qa of the metal tap fitting 31 is set to be slightly smaller than the inner distance Qb between the side plates 12b of the main rail portion 11, there is almost no space between the metal tap fitting 31 and the main rail portion 11. In addition, the middle plate 31b of the metal tap fitting 31 overlaps and comes into close contact with the middle plate 11a of the main rail portion 11. Accordingly, in the upper portion and the side portions of the metal tap fitting 31, there is almost no space between the metal tap fitting 31 and the main rail portion 11, so the main rail portion 11 is reinforced at the location of the metal tap fitting 31.

In addition, because the side plates 31d of the metal tap fitting 31 are disposed perpendicularly to the side plates 11b of the main rail portion 11, the side plates 31d of the metal tap fitting 31 can prevent the side plates 11b of the mounting rail 11 from warping, so the side plates 11b of the mounting rail 11 are strongly reinforced, and deformation, such as twisting of the mounting rail 11, is prevented.

Thus, even if a large load or force acts on the metal tap fitting 31, the main rail portion 11 will not undergo deformation or damage at the location of the metal tap fitting 31, and the metal tap fitting 31 will not fall off from the main rail portion 11.

A construction example of the structure installation stand 1 of the present embodiment will be described next. FIG. 10 shows a plurality of structure installation stands 1 that are arranged side by side so as to support a flat plate-like structure such as a solar cell module.

In FIG. 10, four structure installation stands 1 are arranged side by side with a prescribed spacing therebetween, and three cross rails 27 are disposed straddling the mounting rails 4 of the structure installation stands 1 with a prescribed spacing therebetween in the horizontal direction. Also, two diagonal members 28 are disposed straddling a space between two mutually adjacent vertical supports 5 so as to reinforce the vertical supports 5.

As described above, after structure installation stands 1 are installed, three cross rails 27 are disposed so as to straddle the mounting rails 4. As shown in FIG. 8, each cross rail 27 is disposed between a pair of support pieces 31a of the metal tap fitting 31 that protrude from the engagement hole 11d of the main rail portion 11 of each mounting rail 4, and a bolt 33 is screwed into the screw hole 31c of the metal tap fitting 31 of the mounting rail 4 to clamp them and to fix the cross rail 27 to the mounting rail 4. At this time, the lower cross rail 27 is securely fixed by firmly clamping each bolt 33, and the center cross rail 27 and the upper cross rail 27 are temporarily fixed by lightly clamping each bolt 33.

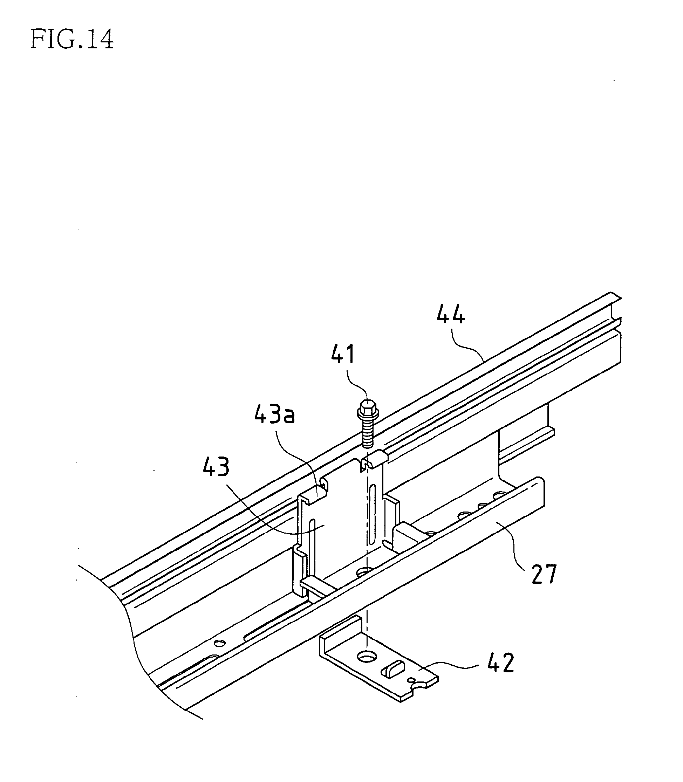

Subsequently, a fixing metal fitting 43 is fixed to each cross rail 27 using a bolt 41 and a screw clamp metal fitting 42 as shown in FIG. 14. The fixing metal fitting 43 includes hook claws 43a provided on the upper end thereof. The hook claws 43a are engaged with one side of a solar cell module so as to fix and support the solar cell module. A set of two hook claws 43a is used for one side of a solar cell module.

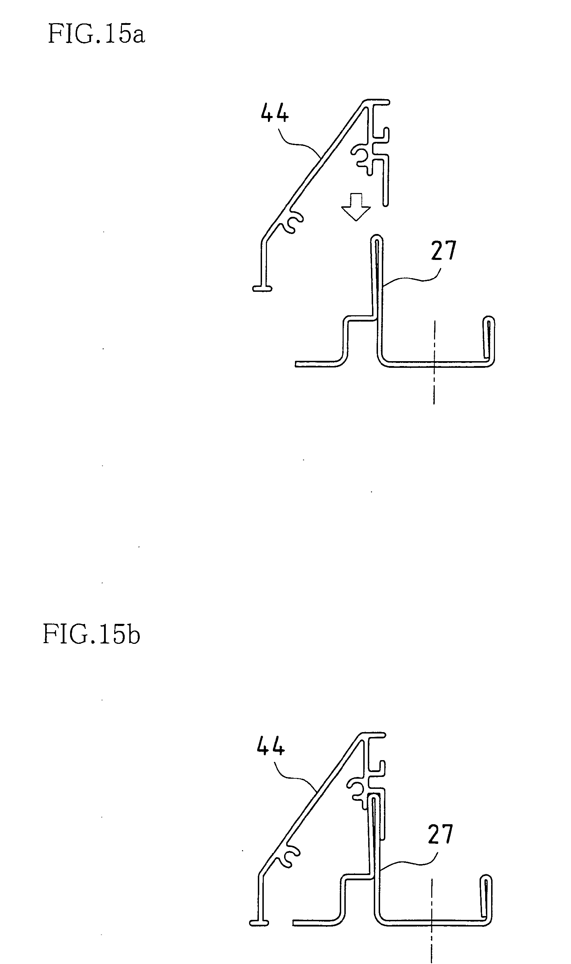

Also, as shown in FIGS. 15a and 15b, an eave edge cover 44 is provided at the front of the lower cross rail 27.

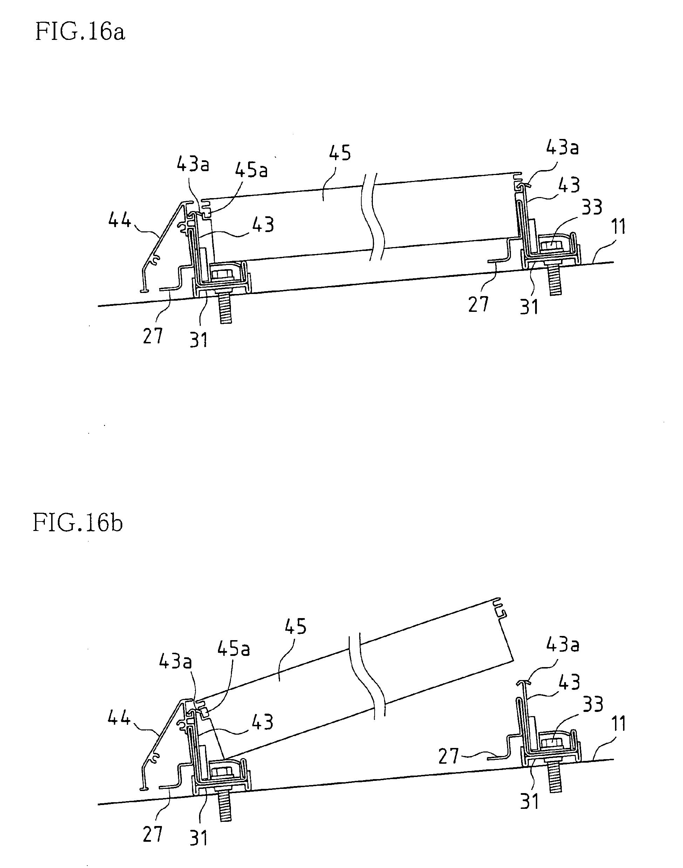

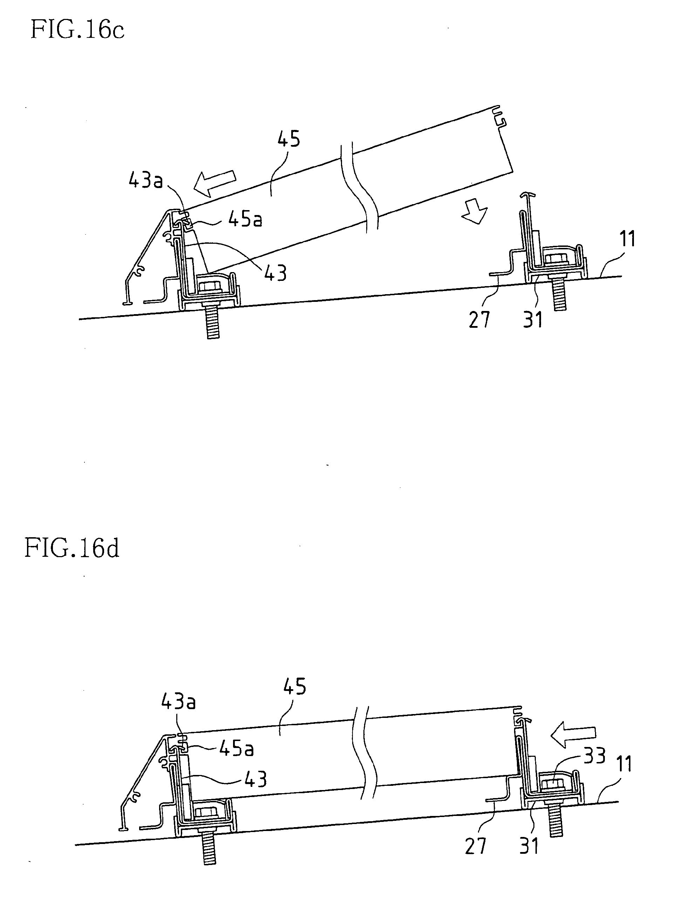

After that, as shown in FIG. 16a, a solar cell module 45 is disposed by inserting the solar cell module 45 between the lower cross rail 27 and the center cross rail 27. In practice, a plurality of solar cell modules 45 are disposed side by side between the lower cross rail 27 and the center cross rail 27.

At this time, the bolts 33 temporarily clamping the center cross rail 27 are loosened, and the metal tap fittings 31 supporting the center cross rail 27 are allowed to move along the engagement holes 11d of the mounting rails 4 so as to adjust the position of the center cross rail 27 and, then, the center cross rail 27 is brought into contact with the upper side of the solar cell module 45.

Subsequently, the upper side of the solar cell module 45 is lifted as shown in FIG. 16b, and the lower side of the solar cell module 45 is pressed against the lower cross rail 27 as shown in FIG. 16bc. By doing so, the hook claws 43a of the fixing metal fitting 43 are engaged to an engagement groove 45a provided in the lower side of the solar cell module 45.

Furthermore, the upper side of the solar cell module 45 is moved down to mount the solar cell module 45 on the center cross rail 27 as shown in FIG. 16d.

Then, the center cross rail 27 is pressed against the upper side of the solar cell module 45 so as to sandwich the solar cell module 45 between the lower cross rail 27 and the center cross rail 27. In this state, the bolts 33 temporarily clamping the center cross rail 27 are firmly clamped to securely fix the center cross rail 27. By doing so, the solar cell module 45 is firmly supported by being sandwiched between the lower cross rail 27 and the center cross rail 27.

In the same procedure as above, another solar cell module 45 is supported by being sandwiched between the center cross rail 27 and the upper cross rail 27.

It should be noted that the present invention is not limited to the embodiment described above, and various modifications are possible. For example, the mounting rail has a hat-shaped cross section, but it may have an approximately U-shaped cross section. Likewise, the mounting rail is divided into a main rail portion and a front end portion, but such division is not necessarily required. It is divided into a main rail portion and a front end portion because the front end portion alone is short in length and is easily bent. If the main rail portion and the front end portion are formed as a single body, the orientation or position of the front end portion can change in the bending process of the front end portion, changing the orientation or position of the long main rail portion. Consequently, a space therefor is required, making the processing work difficult.

The present invention may be embodied in various other forms without departing from the gist or essential characteristics thereof. Therefore, the embodiment described above is to be considered in all respects as illustrative and not limiting. The scope of the invention is indicated by the appended claims rather than by the foregoing description, and all modifications or changes that come within the meaning and range of equivalency of the claims are intended to be embraced therein.

This application claims priority on Japanese Patent Application No. 2007-044123 filed in Japan on February 23, 2007, the entire contents of which are incorporated herein by reference.

### Industrial Applicability

The present invention is applicable as a structure installation stand for use in installing a flat plate-like structure, such as a solar cell module, on the ground, a flat roof or the like.

## Claims

1. A structure installation stand comprising: a mounting rail on which a structure is mounted; and a metal tap fitting that locks the structure onto the mounting rail,
wherein the mounting rail includes at least a middle plate that extends in a lengthwise direction of the mounting rail and two side plates that are parallel to each other on both sides of the middle plate,
the metal tap fitting includes a middle plate, two side plates that are parallel to each other on both sides of the middle plate thereof, and support pieces that protrude above the middle plate thereof from the side plates, respectively, and
the metal tap fitting is disposed inside the mounting rail such that the side plates of the metal tap fitting are perpendicular to the side plates of the mounting rail, and the support pieces of the metal tap fitting are allowed to protrude from a hole of the middle plate of the mounting rail so that the structure is locked onto the mounting rail by the support pieces of the metal tap fitting.

2. The structure installation stand according to claim 1,
wherein the side plates of the metal tap fitting are double ply by being folded in two, and the support pieces of the metal tap fitting protrude above the middle plate of the metal tap fitting from ends of the side plates.

3. The structure installation stand according to claim 2,
wherein the support pieces that protrude from the ends of the side plates of the metal tap fitting have a T-shaped head portion, and
the ends of the side plates of the metal tap fitting are recessed below an upper surface of the middle plate of the metal tap fitting.

4. The structure installation stand according to claim 1,
wherein the middle plate of the metal tap fitting is fixed inside the mounting rail so as to overlap the middle plate of the mounting rail.

5. The structure installation stand according to claim 1,
wherein a length of the side plates of the metal tap fitting and an inner distance between the side plates of the mounting rail are made substantially equal.

6. The structure installation stand according to claim 1,
wherein the support pieces of the metal tap fitting have a T-shaped head portion, and
the hole of the middle plate of the mounting rail is formed by connecting an insert slit through which the T-shaped head portions of the support pieces are inserted and an engagement hole in which the T-shaped head portions of the support pieces are hooked, so that the T-shaped head portions of the support pieces are inserted through the insert slit and guided to the engagement hole.
